# EUROPEAN PATENT SPECIFICATION

(11) **EP 1 603 727 B1**
(45) Date of publication and mention of the grant of the patent: **06.06.2007**
(21) Application number: 04705085.1
(22) Date of filing: 26.01.2004
(51) Int. Cl.: B29C 45/00, B29C 45/17, B29C 31/00

(54) **PLANT AND METHOD FOR PRODUCING PRODUCTS ASSEMBLED OF INJECTION-MOULDED PLASTIC COMPONENTS**
ANLAGE UND VERFAHREN ZUR HERSTELLUNG VON PRODUKTEN AUS SPRITZGUSS-KUNSTSTOFFKOMPONENTEN
ATELIER ET PROCEDE DE PRODUCTION DE PRODUITS ASSEMBLES A PARTIR DE COMPOSANTS EN PLASTIQUE MOULE PAR INJECTION

(30) Priority: 28.01.2003 SE 0300218
(43) Date of publication of application: 14.12.2005
(73) Proprietor: Hotswap, 553 05 Jönköping (SE)
(72) Inventor: RINMAN, Johan, 578 92 Aneby (SE); AXELSSON, Robert, 563 91 Gränna (SE)
(74) Representative: Holme Patent A/S
(86) International application number: PCT/EP2004/000617
(87) International publication number: WO 2004/067252

(56) References cited:
- EP-A- 0 285 717
- EP-A- 1 164 000
- DE-A- 10 209 391
- GB-A- 701 452
- US-B1- 6 360 899

## Description

The invention relates to a method for transporting and/or assembling injection moulded components, and a plant for producing products assembled of injection-moulded plastic components, comprising at least two injection-moulding machines and an assembling station for assembling said components.

Very many products are assembled of injection-moulded plastic components of different kinds. Each kind of component is injection-moulded by means of a special mould mounted in an injection-moulding machine. The finished components are normally collected in a casing. The same machine is also often used to injection-mould the other components or some of them. The casings with the components are then transported to a station for separating the components from their sprues and thereafter to an assembling station where the components are manually and/or by means of robots assembled to the finished product.

The handling and assembling of the components in this way is however, very labour-intensive and costly and moreover the production capacity is relatively low.

When a larger capacity is desired, one or more injection-moulding machine is used for each component. The production rates of these machines are preferably the same thereby ensuring that the different components can be both separated from their sprues and arrive at an assembling station at the same time. Thereby is it possible to successively assemble the components in the same sequence as they arrive at the assembling station.

The production capacity is, however, limited by the possible production rate at the separation station and assembling station. This production rate is relatively low, since the different components arrive to the stations in an unarranged orientation and therefore first need to be correctly orientated. The separation and assembling of the components is therefore also relatively labour-intensive and costly in this case.

To avoid separation of the components the US patent document no. US-B-6360899 discloses the production of a number of injection-moulded components with a common sprue. The components are not separated from the sprue but are sold as one piece. The pieces are separated from the sprue by the end user and used as light holders. The sprue is used as a cord wrap.

EP-A-1164000 is a European patent document, which describes a method for manufacturing an optical disc. The optical disc described herein comprises two disc halves, which are bonded together to form a single disc at an assembly station. The two halves are provided from separate injection moulding units.

In the British patent document GB 701452 a method for injection-moulding and assembling parts is described. In order to avoid variations in tolerances, mating parts in an assembly are produced in the same mould and thereby receive a common sprue. The parts are afterwards one by one stamped out of the sprue in a machine and assembled with its mating part.

In one aspect according to the invention is provided a method of the type mentioned in the opening paragraph for in an easy and an expedient way transporting and/or assembling inject-moulded plastic components by means of the sprue originally connected to the components.

In another aspect according to the invention is provided a plant of the type mentioned in the opening paragraph, which is less labour-intensive and costly than known hitherto.

In third aspect according to the invention is provided a plant of the type mentioned in the opening paragraph, which has a higher production rate than known hitherto.

In a forth aspect according to the invention is provided a plant of the type mentioned in the opening paragraph, which has a simple, cheap and effective conveying system for conveying the components of the products through the plant.

In a fifth aspect according to the invention is provided a plant of the type mentioned in the opening paragraph having a conveying system which automatically orientates the components in the correct way during the production process.

In a sixth aspect according to the invention is provided a plant and a method of the type mentioned in the opening paragraph having a conveying system used in the separating and assembling operations.

In a seventh aspect according to the invention is provided a method of the type mentioned in the opening paragraph to, in a simple, cheap and effective way, assemble injection-moulded plastic components of different kinds into finished products at a higher rate than known hitherto.

The method according to the invention comprises that the components are injection-moulded in such a way, that at least two components get a common sprue for each inject-moulding operation and that said sprues are used for transporting and/or assembling the components.

The sprues are conventionally disconnected from the components immediately after each injection-moulding operation, whereby the components need to be orientated before at least the assembling operation. This orientation process is labour-intensive and costly. This problem is, however, advantageously remedied by according to the invention using the sprues for transporting and assembling the components manually or by means of robots.

The plant according to the invention comprises a conveying system for conveying the sprues, still connected with the components, formed during the injection-moulding process, from the injection-moulding machines to the assembling station in such a way that the sprues arrive to this station in a predetermined orientated state.

The mould for injection-moulding a component is normally equipped with channels for injecting the hot and plasticized plastic into the cavity formed in the mould for moulding the component as a cast of the cavity, thereby at the same time also moulding the sprues as a cast of said channels.

For obtaining a large production rate and an economic production, the mould will normally be designed to mould multiple components simultaneously, whereby these components get a common sprue.

As is clear from the above-mentioned explanation the sprues are necessary for injection-moulding the components. But in a conventional plant they are labour-intensive and costly to handle in the subsequent production where they are normally separated from the components in a production step immediately after the moulding operation.

In contrast, the sprues, in the plant according to the invention, are utilized in the production process for carrying the components from the injection-moulding machines to the assembling station in a predetermined orientated state, allowing the components to be securely, easily and quickly assembled, resulting in a high production rate with less effort and cost than in conventional processes.

A feeding robot can be placed at each injection-moulding machine for catching the sprues, when being ejected from the injection-moulding machine, and carrying them at least part of the way to the assembling station. In addition at least one assembling robot can be placed at the assembling station for receiving and assembling the components. The orientation of the components, which arrive at the assembling station, is therefore advantageously predetermined already from the beginning of the process.

The conveying system can, when only a smaller production capacity is required, be arranged in such a way that the assembling station receives the sprues, connected with the components, directly from the feeding robots. The plant according to this embodiment is very simple and cheap.

When a larger production capacity is required, the conveying system can be comprised of at least one conveyer extending between the feeding robots and the, at least one, assembling robot. The feeding robots feed the conveyer during production with sprues, connected with the components, which at the end of the conveyer are handed over to the assembling robot.

The conveyer can, in a preferred embodiment, comprise one or more rails, each having a longitudinal groove for accommodating at least one part of each of the sprues. The conveyer can moreover have means in the form of pneumatic cylinders or air jets for slidably displacing said suspension parts in the longitudinal grooves. Said part of each of the sprues is in this case formed as a suspension part, which the feeding robots insert in the longitudinal groove, during the production.

For ensuring that the sprues with the components arrive at the assembling station in the desired orientation the suspension parts and the grooves can be formed in such a way that the suspension parts cannot turn or only turn a little in the grooves around an axis extending in the longitudinal direction of the actual rail. The components will therefore always be kept in the same or nearly the same orientated position in planes extending perpendicular to the rails.

In an advantageous embodiment, where the suspension parts are securely guided in this way in the grooves, the cross section of each groove of the rails can have the shape of a cross and the suspension part of the sprues has a corresponding cross shape.

The component will also be kept in the same or nearly the same orientated position in planes extending in the longitudinal direction of the rails when each sprue has more than one suspension part, whereby the sprues are prevented from turning around axes extending perpendicular to said planes.

When each sprue is formed with only two suspension parts interconnected with a cross bar it is advantageously obtained that the sprues are allowed to pass curves on the rails without bending the cross bar, which often consists of stiff plastic.

The conveying system can, for obtaining a very large production capacity, have one or more main rails, each of which is connected with one or more branch rails each being fed by a feeding robot with sprues interconnected with components. The main rails are then supplied with said sprues from their associated branch rails, whereby the different components are conveyed to the assembling station by means of each of their main rails in positions orientated in such a way that the components quickly and easily can be assembled to the desired product.

The invention will be explained in greater detail below where further advantageous properties and example embodiments are described with reference to the drawings, in which
Fig. 1 is a flow chart for an embodiment of the plant according to the invention for producing products assembled of injection-moulded plastic components,
Fig. 2 shows in a larger scale, seen in perspective, a part of the conveying system of the plant with a number of rails,
Fig. 3 shows a section taken along the line III-III in fig. 2,
Fig. 4 shows a fragment of the same in a longitudinal section, seen from the side,
Fig. 5 shows a section of another embodiment of a rail to the conveying system,
Fig. 6 shows a fragment of the same in a longitudinal section, seen from above,
Fig. 7 shows, seen in perspective, a fragment of the rail shown in fig. 3 and 4 formed with an in-feed for the components,
Fig. 8 shows an assembling station for assembling the component to a finished product,
Fig. 9 shows a product produced by means of the plant, and
Fig. 10 is a flow chart for another embodiment of the plant according to the invention for producing products assembled of injection-moulded plastic components.

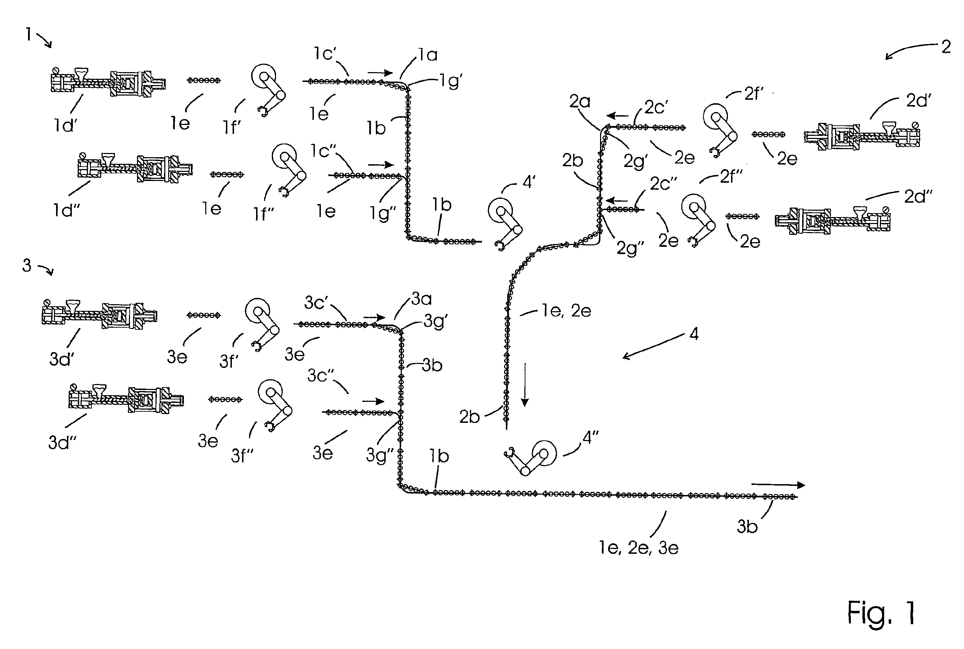

The plant shown in fig. 1 is in this case used for producing a product assembled of three different injection-moulded components. The product and the components are shown here only as signatures.

The plant comprises a first, a second and a third production line 1, 2 and 3, an assembling station 4 and a conveying system 5 consisting of a first conveyer part 1a of the first production line 1, a second conveyer part 2a of the second production line 2, and a third conveyer part 3a of the third production line 3.

The first conveyer part 1a consists, in this case, of a first main rail 1b, which is connected with two first branch rails 1c' and 1c", the second conveyer part 2a consists of a second main rail 2b, which is connected with two second branch rails 2c' and 2c" and the third conveyer part 3a consists of a third main rail 3b, which is connected with two third branch rails 3c' and 3c".

The first production line 1 comprises two first injection-moulding machines 1d' and 1d" for injection-moulding a first kind of injection-moulded plastic component 1e, the second production line 2 comprises two second injection-moulding machines 2d' and 2d" for injection-moulding a second kind of injection-moulded plastic component 2e, and the third production line 3 comprises two third injection-moulding machines 3d' and 3d" for injection-moulding a third kind of injection-moulded plastic component 3c.

The first production line 1 further comprises two first feeding robots 1f' and f" for placing the sprues with components 1e injection-moulded by the two first injection-moulding machines 1d' and 1d" on the two first branch rails 1c' and 1c", the second production line 2 comprises two second feeding robots 2f' and 2f" for placing the sprues with the components 2e injection-moulded by the two second injection-moulding machines 2d' and 2d" on the two second branch rails 2c' and 2c", and the third production line 3 comprises two third feeding robots 3f' and 3f" for placing the sprues with the components 3e injection-moulded by the two third injection-moulding machines 3d' and 3d" on the two third branch rails 3c' and 3c" .

Means (not shown in fig. 1) serve to push the sprues with the components in the direction of the arrows along the branch rails to the main rails and further along them in the direction of the arrows to a separating and assembling station 4.

The assembling station 4 comprises two assembling robots 4' and 4" for first assembling the first and second components 1e and 2e on the second main rail 2b and then assembling the already assembled components 1e, 2e on the second main rail 2b with the third component 3e on the third main rail 3b to the finished product 1e,2e,3e, which in the direction of the arrow is carried to a packing station and/or a storage (not shown).

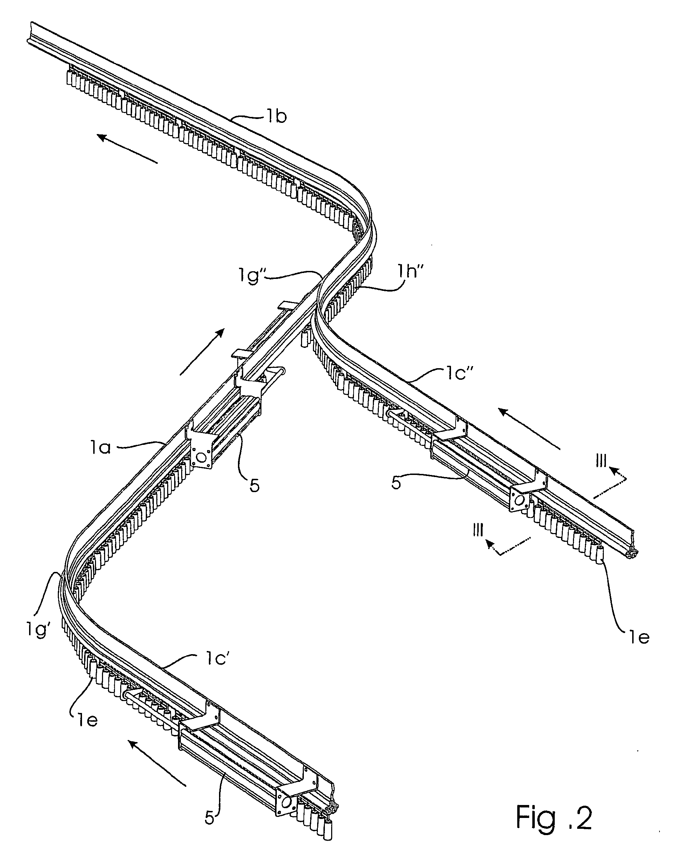

Fig. 2 shows in perspective and in a larger scale the first conveyer part 1a with the first main rail 1b connected with the two branch rails 1c' and 1c" by means of connections 1g' and 1g" guiding the sprues with the components 1e from the branch rails 1c' and 1c" into the main rail 1b along curves 1h' and 1h" merging with the main rail 1a.

The sprues with the components 1e are, during the production, pushed in the direction of the arrows along the branch rails 1c', 1c" to the main rail 1a via the curved connections by means of pneumatic cylinders 5 and along the main rail 1a towards the assembling station.

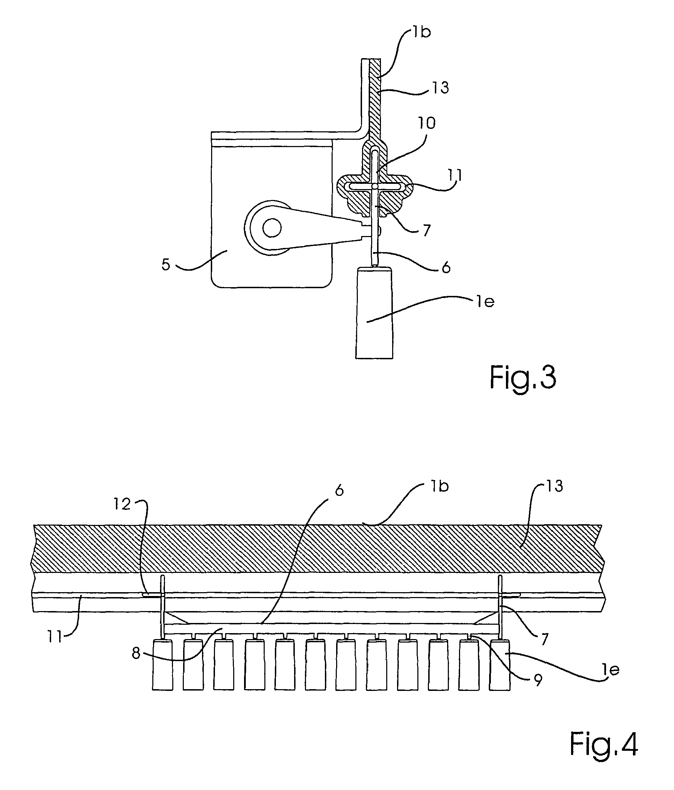

Fig. 3 and 4 show, in a first embodiment, e.g. the main rail 1b with injection-moulded components 1e, which are still connected to the sprue 6, which is injection-moulded together with the components.

The sprue has two suspension parts 7 connected with a cross bar 8. Each of the components le is connected with the cross bar 8 by means of a tenon 9.

Each suspension part is formed with a cross 10, which is inserted into a correspondingly shaped longitudinal groove 11 in the rail 1b. Each suspension part is furthermore formed with a spacing piece 12 for keeping the sprues with their components at a predetermined mutual distance from each other when being pushed along the rail. A rib 13, which is formed on the rail, serves for hanging up the rail to e.g. the ceiling of the building in which the plant is situated.

Due to the cross shape of the groove and the suspensions parts and also to the fact that the sprue has two suspension parts placed at a mutual distance from each other, the sprue and thereby the components are prevented from tilting in any direction in relation to the rail. The components will therefore advantageously arrive at the assembling station in an already orientated state, whereby it is possible to securely, quickly and easily assemble the components.

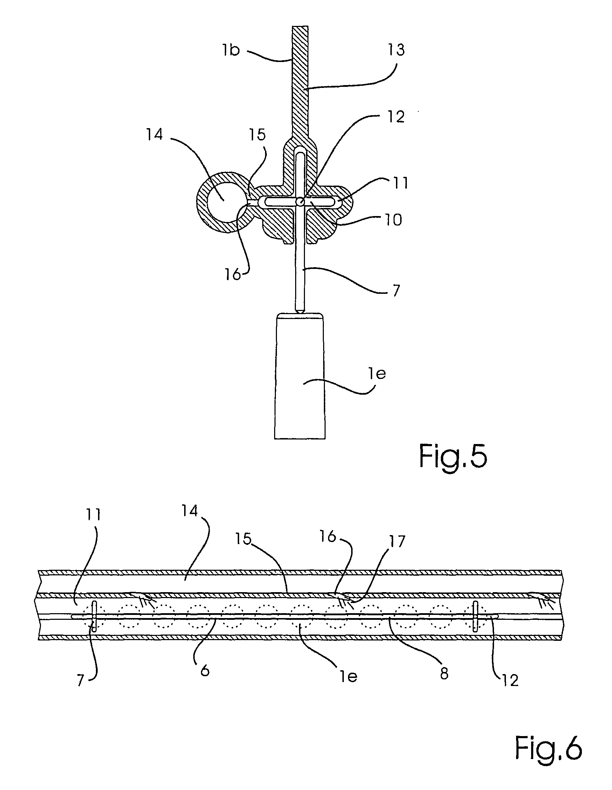

Fig. 5 and 6 shows e.g. the main rail 1b in a second embodiment. An air tube 14 is formed at the side of the rail. This air tube is connected with a supply of pressurized air (not shown). The suspension parts 7 of the sprue 6 with the components 1e is guided in the longitudinal groove 11 formed in the rail. In the wall 15 between the air tube and the groove a number of air nozzles 16 are formed for, in a direction forming an acute angle with the conveying direction shown by the arrow, sending air jets 17 against the components during operation of the plant, thereby blowing the suspension parts along the rail.

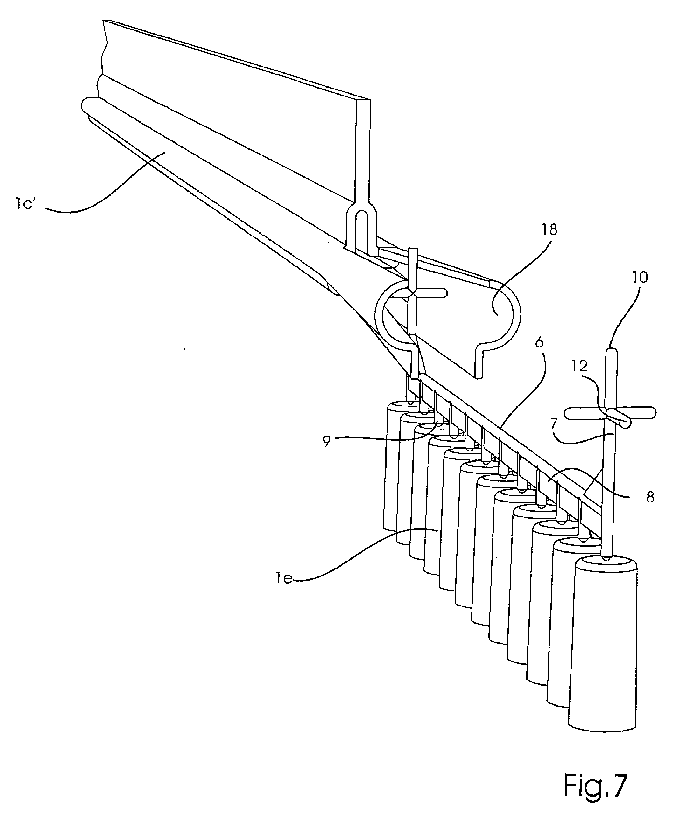

Fig. 7 shows a fragment of e.g. the first branch rail 1c'. The first feeding robot 1f' seizes, during production, the sprue 6 with the components 1e in synchronization with the production rate of the first injection-moulding machine 1d' and inserts the suspension parts 7 in the longitudinal grove of the rail. This operation is safely and accurately made by means of an in-feed 18 formed like a funnel.

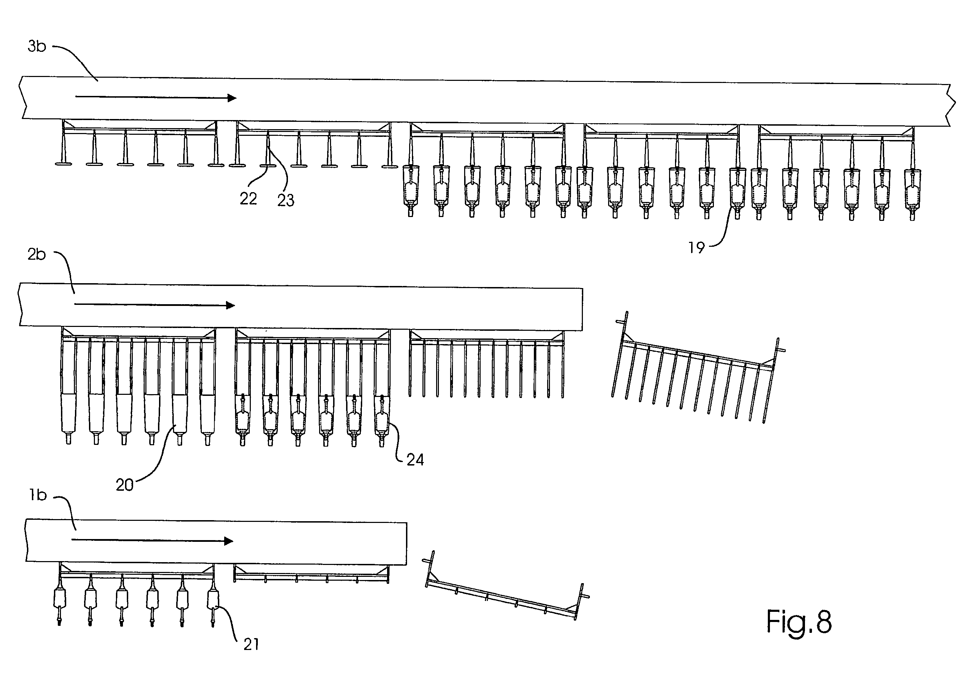

Fig. 8 shows the separation and assembling station 4 for the plant according to the invention. It is, by way of example, assumed that the product produced by means of the plant is a regulator 19 to the infusion set described in the applicant's patent application SE 0300137-7.

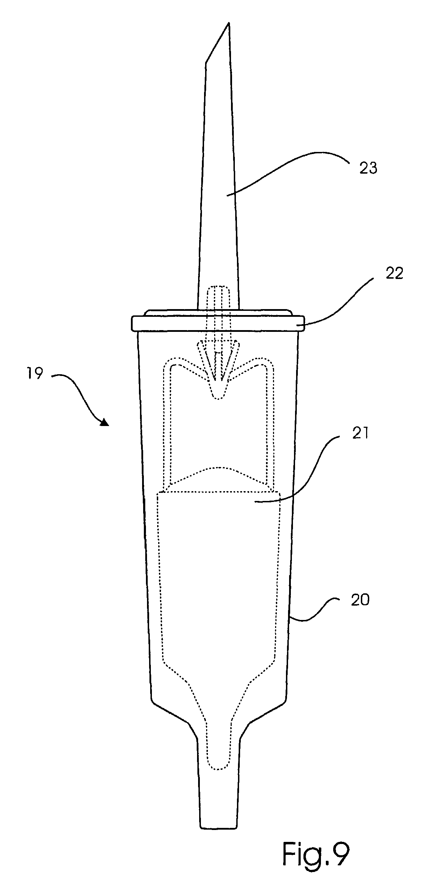

This regulator 19 is shown in fig. 9 and is assembled of three injection-moulded components, namely a housing 20, a floater 21 and a cap 22 with a spike 23.

The sprues with these components are pushed forward on the main rails 1b,2b,3b, the floater 21 on the main rail 1b, the housing 20 on the main rail 22 and the cap 23 on the main rail 3b. The rails are in this case placed above each other but could also be placed side by side.

The sprues and thereby the components are, as previously mentioned, correctly orientated when arriving at the assembling station thereby allowing the robots 4' and 4" to securely, easily and quickly assemble the components. The components are separated from their sprues by means of e.g. shears (not shown).

The assembly operation takes place in the following way.

The assembling robot 4' seizes the floaters 21, which are now separated from their sprues on the first main rail 1b, and places them inside the housings 20, while these are still connected with their sprues on the second main rail 2b.

The assembling robot 4" then seizes the assembly 24 of the housings 20 and the floaters 21, which are now separated from the sprues of the housings on the second main branch 2b, and assembles this assembly 24 with the caps 23 on the third main rail 3b.

The assembled regulators 19, which are still connected with the sprues of the caps on the third main rail 3b, are on this main rail then transported to a packing station and/or a storage station (not shown), where the regulators are separated from the sprues and packed into packaging for being supplied to the consumers, e.g. hospitals.

By means of this embodiment of the plant according to the invention a very high output can be obtained.

As an example, the output of a plant for producing products composed of 3 parts, having three production lines each fed by 9 injection-moulding machines is about 11.000 finished products per hour.

In a variant of the above-described plant there is only one production line, which alternatingly is fed with components from two or more injection-moulding machines. The assembling station then is arranged for assembling the components arriving to the assembling station in this way. This plant is suitable for productions where a very high output is not required.

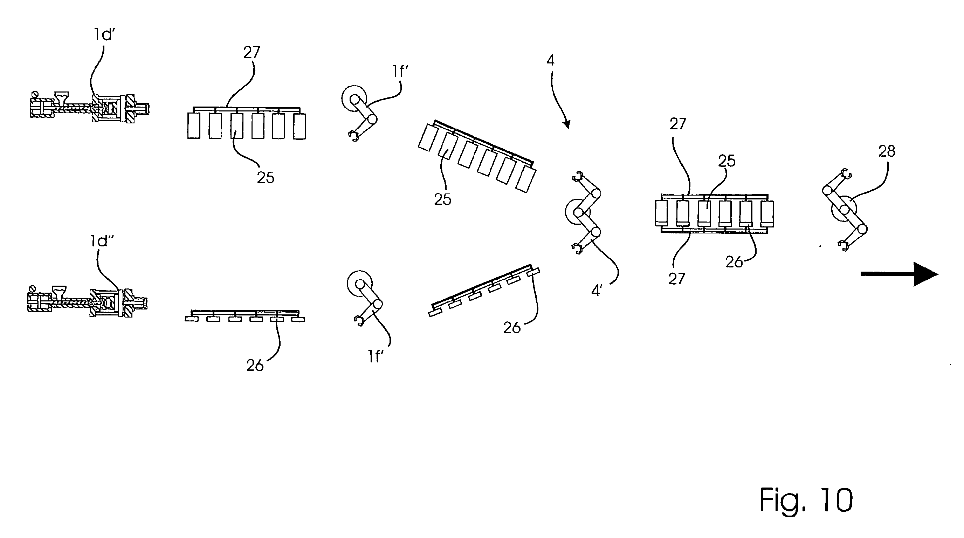

Fig. 10 shows another embodiment for a plant according to the invention for producing a product assembled of two different injection-moulded components 25 and 26. Also in this case there is only one production line, which fundamentally corresponds to the production line 1 shown in fig. 1. The same reference numerals as in fig. 1 - 9 are used for the same parts.

The six components 25 and 26, are respectively, during the production, injection-moulded by means of the injection-moulding machines 1d' and 1 d". The components are in fig. 10 seen immediately after they have been ejected from said machines and are still interconnected with their sprues 27, which in this case are without suspension parts.

The feeding robots 1f' and 1f" catch hold of the sprues 27 and hand them over to the assembling robot 4', which assembles the two parts 25 and 26.

The two sprues 27 are, in this case, formed in such a way that the mutual distance between the six components 25 is the same as the mutual distance between the six components 26. The components 25 and 26 can therefore be assembled while still being interconnected with their sprues 27, thereby improving the speed of the process greatly and even further avoiding the troublesome process of having to orientate and assemble components that have already been separated from their sprues after the injection-moulding process.

A further robot 28 catches hold of the assembled components still interconnected with their sprues 27 and brings them to a separation and packing station (not shown).

From the above, it is obvious that keeping the components on the sprue is not only advantageous when using a conveyor system comprising of rails, but also advantageous when the sprues are transported by other means between the different stations, such as an assembly station and a packaging station.

As can be understood, it is essential to keep track of the orientation of the sprue, e.g. by robots or rails, whereby the sprues will be transported and assembled quickly and easily and at a much faster rate than if the components were separated from their sprue immediately after they were ejected from the injection- moulding machine.

In the above named description is with reference to the drawing described fully automatically operated embodiments according to the invention using the sprues for transporting and assembling the components.

## Claims

1. A plant for producing products (19;25,26) assembled of injection-moulded plastic components (le,2e,3e;20,21,22; 25,25), comprising
- at least two injection-moulding machines (1d', 1d", 2d', 2d", 3d', 3d") for injection-moulding the plastic components (le,2e,3e;20,21,22;25,25), in such a way, that at least two components get a common sprue (6;27),
- an assembling station (4) for assembling said components (le,2e,3e;20,21,22;25,25),
- a conveying system for conveying the sprues (6;27), formed during the injection-moulding process, from the injection-moulding machines (1d', 1d", 2d', 2d", 3d', 3d") to the assembling station (4) in such a way that the sprues (6;27) arrive at this station (4) in a predetermined orientation while still connected with the components (1e,2e,3e;20,21,22;25,25).

2. The plant of claim 1, comprising
- a feeding robot (1f', 1f", 2f', 2f", 3f', 3f") placed at each injection-moulding machines (1d',1d", 2d',2d", 3d',3d") for catching the sprues (6;27) when ejected from the injection-moulding machines (1d', 1d", 2d', 2d", 3d', 3d"), and carrying them at least part of the way to the assembling station (4), and
- at least one assembling robot (4',4") placed at the assembling station (4) for receiving and assembling the components (le,2e,3e;20,21,22;25,25).

3. The plant of claim 1 or 2, wherein the conveying system is arranged in such a way that the assembling robot (4') receives the sprues (27), interconnected with their components (25,27), directly from the feeding robots (1f', 1f").

4. The plant of claim 1 or 2, wherein the conveying system comprises at least one conveyer (1b, 2b, 3b; 1c', 1c", 2c', 2c", 3c', 3c") extending between the feeding robots (1f', 1f", 2f', 2f", 3f', 3f") and the, at least one, assembling robot (4',4") and arranged for being fed with sprues (6), interconnected with the components (1e, 2e, 3e; 20,21,22), by the feeding robots (1f', 1f", 2f', 2f", 3f', 3f") and for handing them over to the, at least one, assembling robot (4,4").

5. The plant of claim 4, wherein the at least one conveyer comprises at least one rail (1b,2b,3b;1c',1c", 2c', 2c", 3c', 3c"), which has a longitudinal groove (11) for accommodating at least one suspension part (10) of each of the sprues (6), and means (5;16) for slidably displacing said suspension parts (10) in the longitudinal groove (11).

6. The plant of claim 5, wherein the suspension parts (10) and the grooves (11) are formed in such a way that the suspension parts (10) cannot turn or only turn a little around an axis extending in the longitudinal direction of the rails (1b, 2b, 3b; 1c', 1c", 2c', 2c", 3c', 3c").

7. The plant of claim 5 or 6, wherein the cross section of each groove (11) of the rails (1b, 2b, 3b; 1c', 1c", 2c', 2c", 3c', 3c") is in the shape of a cross and that the, at least one, suspension part (10) of the sprues (6) is formed as a cross (10), which fits inside the cross formed groove (11).

8. The plant of claim 4 - 7, wherein each sprue (6) is formed with two suspension parts (10) interconnected with a cross bar (8), and also with a number of tenons (9), which extend from the cross bar (8) and each is connecting a component (1e,2e,3e;20,21,22).

9. The plant of each of the claims 4 - 8, wherein the, at least one, rail (1b, 2b, 3b; 1c', 1c", 2c', 2c", 3c', 3c") is formed with a rib (13) for suspending the rail (1b, 2b, 3b; 1c', 1c", 2c', 2c", 3c', 3c") with the mouth of the groove (11) facing downwards.

10. The plant of each of the claims 4 - 9, wherein the, at least one, rail (1c', 1c", 2c', 2c", 3c', 3c") has an in-feed (18) formed at an end of this for introducing the suspension part (10) of a sprue (6) into the groove (11) of the rail (1c", 2c', 2c", 3c', 3c").

11. The plant of each of the claims 4 - 10, wherein the conveying system comprises a main rail (1b, 2b, 3b) connected with one or more branch rails (1c',1c" , 2c',2c",3c',3c"), each formed with an in-feed (13) for introducing the suspension part (10) of a sprue (6) into the groove (11) of the respective branch rail (1c', 1c", 2c', 2c", 3c', 3c").

12. The plant of each of the claims 4 - 11, wherein the conveying system comprises two or more main rails (1b,2b,3b) each connected with one or more branch rails (1c', 1c", 2c', 2c", 3c', 3c").

13. The plant of each of the claims 4 - 12, wherein the plant comprises an assembling station (4) for assembling components (le,2e,3e;20,21,22) of different kinds supplied to the station by two or more main rails (1b,2b,3b).

14. The plant of each of the claims 4 - 13, wherein the means (5) for slidably displacing the suspension parts of the sprues (6) in the longitudinal groove (11) of the rails comprises one or more pneumatic or hydraulic cylinders (5) .

15. The plant of each of the claims 4 - 14, wherein the means (16) for slidably displacing the suspension parts of the sprues (6) in the longitudinal groove (11) comprises a number of air nozzles (16), which are evenly distributed along the groove (11) and each aimed, at least partly, in the displacement direction of the components (le,2e,3e;20,21,22).

16. A method for assembling injection-moulded components (le,2e,3e;20,21,22;25,25) using the plant according to any of the preceding claims 1 - 15, comprising
- injection-moulding the components (1e, 2e, 3e; 20, 21, 22; 25,25) in such a way, that at least two components get a common sprue (6;27) for each inject-moulding operation, and
- using said sprues for transporting and/or assembling the components.

## Patentansprüche

1. Eine Anlage zum Herstellen von Gegenständen (19; 25, 26), die aus injektionsgeformten Kunststoff-Komponenten (1e, 2e, 3e; 20, 21, 22; 25,25) zusammengesetzt sind, mit
wenigstens zwei Injektionsformmaschinen (id', 1d", 2d', 2d", 3d', 3d") zum Injektionsformen der Kunststoffkomponenten (1e, 2e, 3e; 20, 21, 22; 25,25) derart, dass wenigstens zwei Komponenten einen gemeinsamen Anguss (6; 27) bekommen,
eine Montagestation (4) zum Montieren der Komponenten (1e, 2e, 3e; 20, 21, 22; 25, 25),
ein Fördersystem zum Fördern der Angüsse (6; 27), die während des Injektionsformvorgangs gebildet werden, von den Injektionsformmaschinen (1d', Id", 2d', 2d", 3d', 3d") zu der Montagestation (4) derart, dass die Angüsse (6; 27) an der Station (4) in einer vorgegebenen Ausrichtung ankommen, während sie noch mit den Komponenten (1e, 2e, 3e; 20, 21, 22; 25,25) verbunden sind.

2. Die Anlage nach Anspruch 2, mit
einem Speiseroboter (1f, 1f", 2f, 2f', 3f,3f'), der an jeder Injektionsformmaschine (id', 1d", 2d', 2d", 3d', 3d") angeordnet ist zum Auffangen der Angüsse (6; 27), wenn diese von den Injektionsformmaschinen (1d', 1d",2d', 2d",3d',3d") ausgeworfen werden, und Führen der Angüsse auf wenigstens einen Teil des Weges zu der Montagestation (4), und
wenigstens einen Montageroboter (4',4") der an der Montagestation (4) angeordnet ist zur Aufnahme und Montage der Komponenten (1e, 2e, 3e; 20, 21, 22; 25, 25).

3. Die Anlage nach Anspruch 1 oder 2, wobei die das Fördersystem derart angeordnet ist, dass der Montageroboter (4') die Angüsse (27), die mit ihren Komponenten verbunden sind, (25,27), direkt von dem Speiseroboters (If', If") erhält.

4. Die Anlage nach Anspruch 2 oder 3, wobei das Fördersystem wenigstens einen Förderer (1b, 2b, 3b; 1c', 1c, 2c', 2c", 3c', 3c") aufweist, der sich zwischen dem Speiseroboter (1f, 1f', 2f, 2f', 3f, 3f') und dem wenigstens einen, Montageroboter (4',4") erstreckt und angeordnet ist, um von dem Speiseroboter (1f', 1f", 2f', 2f', 3f, 3f') mit den Angüssen (6), die mit den Komponenten (1e, 2e, 3e; 20, 21, 22)verbunden sind, gespeist zu werden und zu deren Übergeben zu dem wenigstens einen Montageroboter (4, 4").

5. Die Anlage nach Anspruch 4, wobei der wenigstens eine Förderer wenigstens eine Schiene (1b, 2b, 3b; 1c', 1c", 2c', 2c", 3c', 3c") aufweist, die eine längliche Kerbe (11) zum Aufnehmen wenigstens eines Aufhängungsteils (10) jeder der Angüsse (6) und Mittel (5; 16) zum gleitenden Verlagern der Aufhängeteile (10) in der Längskerbe (11) hat.

6. Die Anlage nach Anspruch 5, wobei die Aufhängeteile (10) und die Kerben (11) derart ausgebildet sind, dass die Aufhängeteile (10) sich nicht oder nur ein wenig um die Achse, die sich in der Längsrichtung der Schiene (1b, 2b, 3b; 1c', 1c", 2c', 2c", 3c',3c") erstreckt, drehen.

7. Die Anlage nach Anspruch 5 oder 6, wobei der Querschnitt jeder Kerbe (11) der Schiene (1b, 2b, 3b; 1c', 1c", 2c',2c",3c',3c") in der Form eines Kreuzes ist und dass der wenigstens eine Aufhängeteil (10) der Angüsse (6) als Kreuz (10) ausgebildet ist, das in das von der Kerbe (11) gebildete Kreuz paßt.

8. Die Anlage nach Anspruch 4-7, wobei jeder Anguss (6) mit zwei Aufhängeteile (10) ausgebildet ist, die miteinander über eine Querstange (8) verbunden sind, und weiter mit einer Anzahl von Zapfen (9), die sich von der Querstange (8) erstrecken und jeweils eine Komponente (1e, 2e, 3e; 20,21, 22) verbinden.

9. Die Anlage nach einem der Ansprüche 4 - 8, wobei die wenigstens eine Schiene (1b, 2b, 3b; 1c', 1c", 2c', 2c", 3c', 3c") mit einer Rippe (13) zum Aufhängen der Schiene (1b, 2b, 3b;1c',1c", 2c',2c", 3c',3c") mit nach vorne weisender Öffnung der Kerbe (11) versehen ist.

10. Die Anlage nach einem der Ansprüche 4 - 9, wobei die wenigstens eine Schiene (1c',1c", 2c', 2c", 3c', 3c") eine Einführung (18) hat, die an deren eine Ende zum Einbringen des Aufhängungsteil (10) eines Angusses (6) in die Kerbe (11) der Schiene (1c", 2c', 2c", 3c', 3c") ausgebildet ist.

11. Die Anlage nach einem der Ansprüche 4 - 10, wobei das Fördersystem eine Hauptschiene (1b, 2b, 3b) aufweist, die mit einem oder mehreren Zweigschienen (1c', 1c", 2c',2c", 3c',3c") verbunden ist, die jeweils mit einer Einführung (13) zum Einführen des Aufhängungsteil (10) eines Angusses (6) in der Kerbe (11) der jeweiligen Zweigschiene (1c',1c",2c',2c",3c', 3c") versehen ist.

12. Die Anlage nach einem der Ansprüche 4 - 11, wobei das Fördersystem zwei oder mehr Hauptschienen (1b, 2b, 3b) aufweist, die jeweils mit einer oder mehr Zweigschienen (1c',1c",2c',2c", 3c',3c") verbunden sind.

13. Die Anlage nach einem der Ansprüche 4 - 12, wobei die Anlage eine Montagestation (4) zum Montieren von Komponenten (1e, 2e, 3e; 20,21, 22) unterschiedlicher Art, die zu der Station von zwei oder mehr Hauptschienen (1b, 2b, 3b) zugeführt werden, aufweist.

14. Die Anlage nach einem der Ansprüche 4 - 13, wobei die Mittel (5) zum gleitenden Verschieben der Aufhängeteile der Angüsse (6) in der longitudinalen Kerbe (11) der Schienen einen oder mehrere pneumatische oder hydraulische Zylinder (5) aufweisen.

15. Die Anlage nach einem der Ansprüche 4-14, wobei die Mittel (16) zum gleitenden Verlagern der Aufhängeteile der Angüsse (6) in der longitudinalen Kerbe (11) eine Anzahl von Luftdüsen (16) aufweisen, die gleichmäßig entlang der Kerbe (11) verteilt sind und wenigstens teilweise in die Verlagerungsrichtung der Komponenten (1e, 2e, 3e; 20,21, 22) weisen.

16. Ein Verfahren zum Montieren von injektionsgeformten Komponenten (1e, 2e, 3e; 20, 21, 22; 25,25) unter Verwendung einer Anlage nach einem der vorangehenden Ansprüche, mit
Injektionsformen der Komponenten (1e, 2e, 3e; 20,21, 22;25,25) derart, dass wenigstens zwei Komponenten bei jedem Injektionsformvorgang einen gemeinsamen Anguss (6; 27) bekommen und
Verwenden der Angüsse für den Transport und/oder die Montage der Komponenten.

## Revendications

1. Atelier de production de produits (19 ; 25, 26) assemblés à partir de composants en plastique moulés par injection (1^{er}, 2^{ième}, 3^{ième}; 20, 21, 22 ; 25, 25), comprenant
- au moins deux machines de moulage par injection (1d', 1d", 2d', 2d", 3d', 3d") destinées à mouler par injection les composants en plastique (1^{er}, 2^{ième}, 3^{ième} ; 20, 21, 22 ; 25, 25), de telle sorte qu'au moins deux composants reçoivent une carotte (6 ; 27) commune,
- un poste d'assemblage (4) destiné à assembler lesdits composants (1^{er}, 2^{ième}, 3^{ième} ; 20, 21, 22 ; 25, 25),
- un système de transport destiné à transporter les carottes (6 ; 27), formées pendant le processus de moulage par injection, des machines de moulage par injection (1d', 1d", 2d', 2d", 3d', 3d") au poste d'assemblage (4) de telle sorte que les carottes (6 ; 27) arrivent à ce poste (4) dans une orientation prédéterminée tout en étant encore raccordées aux composants (1^{er}, 2^{ième}, 3^{ième}; 20, 21, 22; 25, 25).

2. Atelier selon la revendication 1, comprenant
- un robot d'alimentation (1f', 1f", 2f', 2f", 3f', 3f") placé au niveau de chaque machine de moulage par injection (1d' , 1d", 2d', 2d", 3d', 3d") destiné à saisir les carottes (6 ; 27) lorsqu'elles sont éjectées des machines de moulage par injection (1d', 1d", 2d', 2d", 3d', 3d"), et à les transporter au moins sur une partie du trajet vers le poste d'assemblage (4), et
- au moins un robot d'assemblage (4', 4") placé au niveau du poste d'assemblage (4) destiné à recevoir et assembler les composants (1^{er}, 2^{ième}, 3^{ième} ; 20, 21, 22 ; 25, 25).

3. Atelier selon la revendication 1 ou 2, dans lequel le système de transport est agencé de telle sorte que le robot d'assemblage (4') reçoit les carottes (27), interconnectées avec leurs composants (25, 27), directement des robots d'alimentation (1f', 1f").

4. Atelier selon la revendication 1 ou 2, dans lequel le système de transport comprend au moins un transporteur (1b, 2b, 3b ; 1c', 1c", 2c', 2c", 3c', 3c") s'étendant entre les robots d'alimentation (1f', 1f", 2f', 2f", 3f', 3f") et le, au moins un, robot d'assemblage (4', 4") et agencé pour être alimenté en carottes (6), interconnectées avec les composants (1^{er}, 2^{ième}, 3^{ième} ; 20, 21, 22), par les robots d'alimentation (1f' , 1f" , 2f', 2f", 3f', 3f") et à les transmettre au, au moins un, robot d'assemblage (4, 4").

5. Atelier selon la revendication 4, dans lequel le au moins un transporteur comprend au moins un rail (1b, 2b, 3b ; 1c' , 1c", 2c', 2c", 3c', 3c"), qui présente une rainure longitudinale (11) destinée à loger au moins une partie de suspension (10) de chacune des carottes (6), et des moyens (5 ; 16) destinés à déplacer de manière coulissante lesdites parties de suspension (10) dans la rainure longitudinale (11).

6. Atelier selon la revendication 5, dans lequel les parties de suspension (10) et les rainures (11) sont formées de telle sorte que les parties de suspension (10) ne peuvent tourner ou ne peuvent que légèrement tourner autour d'un axe s'étendant dans la direction longitudinale des rails (1b, 2b, 3b ; 1c', 1c", 2c', 2c", 3c', 3c").

7. Atelier selon la revendication 5 ou 6, dans lequel la section transversale de chaque rainure (11) des rails (1b, 2b, 3b ; 1c', 1c", 2c', 2c", 3c', 3c") présente la forme d'une croix et en ce que la, au moins une, partie de suspension (10) des carottes (6) est formée comme une croix (10), qui s'ajuste à l'intérieur de la rainure (11) en forme de croix.

8. Atelier selon l'une quelconque des revendications 4 à 7, dans lequel chaque carotte (6) est formée avec deux parties de suspension (10) interconnectées avec une traverse (8), et également avec un certain nombre de tenons (9), qui s'étendent depuis la traverse (8) et chacun se raccorde à un composant (1^{er}, 2^{ième}, 3^{ième}; 20, 21, 22).

9. Atelier selon chacune des revendications 4 à 8, dans lequel le, au moins, un rail (1b, 2b, 3b ; 1c', 1c" , 2c', 2c" , 3c', 3c") est formé avec une nervure (13) destinée à suspendre le rail (1b, 2b, 3b ; 1c' , 1c", 2c', 2c", 3c', 3c") avec l'ouverture de la rainure (11) tournée vers le bas.

10. Atelier selon chacune des revendications 4 à 9, dans lequel le, au moins un, rail (1c', 1c", 2c', 2c", 3c', 3c") présente un alimenteur (18) formé à une extrémité de celui-ci destiné à introduire la partie de suspension (10) d'une carotte (6) à l'intérieur de la rainure (11) du rail (1c", 2c', 2c", 3c', 3c").

11. Atelier selon chacune des revendications 4 à 10, dans lequel le système de transport comprend un rail principal (1b, 2b, 3b) raccordé à un ou plusieurs rail(s) dérivé (s) (1c', 1c", 2c', 2c", 3c', 3c"), chacun formé avec un alimenteur (13) destiné à introduire la partie de suspension (10) d'une carotte (6) à l'intérieur de la rainure (11) du rail dérivé (1c', 1c", 2c', 2c", 3c', 3c") respectif.

12. Atelier selon chacune des revendications 4 à 11, dans lequel le système de transport comprend deux rails principaux (1b, 2b, 3b) ou plus raccordés chacun à un rail dérivé (1c', 1c", 2c', 2c", 3c', 3c") ou plus.

13. Atelier selon chacune des revendications 4 à 12, dans lequel l'atelier comprend un poste d'assemblage (4) destiné à assembler les composants (1^{er}, 2^{ième}, 3^{ième} ; 20, 21, 22) de différents types amenés au poste par deux rails principaux (1b, 2b, 3b) ou plus.

14. Atelier selon chacune des revendications 4 à 13, dans lequel les moyens (5) destinés à déplacer de manière coulissante les parties de suspension des carottes (6) dans la rainure longitudinale (11) des rails comprend un ou plusieurs vérin(s) hydraulique(s) ou pneumatique(s) (5).

15. Atelier selon chacune des revendications 4 à 14, dans lequel les moyens (16) destinés à déplacer de manière coulissante les parties de suspension des carottes (6) dans la rainure longitudinale (11) comprend un certain nombre de buses d'air (16), qui sont distribuées régulièrement le long de la rainure (11) et orientées chacune, au moins en partie, dans la direction de déplacement des composants (1^{er}, 2^{ième}, 3^{ième}; 20, 21, 22).

16. Procédé d'assemblage de composants moulés par injection (1^{er}, 2^{ième}, 3^{ième} ; 20, 21, 22 ; 25, 25) utilisant l'atelier selon l'une quelconque des revendications 1 à 15, comprenant
- le moulage par injection des composants (1^{er}, 2^{ième}, 3^{ième} ; 20, 21, 22 ; 25, 25) de telle sorte qu'au moins deux composants reçoivent une carotte (6 ; 27) commune pour chaque opération de moulage par injection, et
- l'utilisation desdites carottes pour transporter et/ou assembler les composants.
